Europäisches Patentamt

(19) European Patent Office

Office européen des brevets

(11) Numéro de publication : **0 294 300 B1**

(12) **FASCICULE DE BREVET EUROPEEN**

(45) Date de publication du fascicule du brevet :
27.12.91 Bulletin 91/52

(51) Int. Cl.$^5$ : **C25C 3/08, C01B 7/19**

(21) Numéro de dépôt : 88420169.0

(22) Date de dépôt : 26.05.88

(54) **Procédé de traitement, par silicopyrohydrolyse, de brasquages provenant de cuves d'électrolyse Hall-Héroult.**

(30) Priorité : 01.06.87 FR 8708012

(43) Date de publication de la demande :
07.12.88 Bulletin 88/49

(45) Mention de la délivrance du brevet :
27.12.91 Bulletin 91/52

(84) Etats contractants désignés :
CH DE ES GB GR IT LI NL SE

(56) Documents cités :
EP-A- 27 493
FR-A- 2 338 336
US-A- 4 113 832
US-A- 4 160 808

(73) Titulaire : **ALUMINIUM PECHINEY**
**23, rue Balzac**
**F-75008 Paris Cédex 08 (FR)**

(72) Inventeur : **Leroy, Michel**
**Bat. A3 Les Parcs de Rochepleine**
**F-38120 St. Egreve (FR)**

(74) Mandataire : **Pascaud, Claude et al**
**PECHINEY 28, rue de Bonnel**
**F-69433 Lyon Cédex 3 (FR)**

Jouve, 18, rue Saint-Denis, 75001 PARIS

## Description

## DOMAINE TECHNIQUE DE L'INVENTION

L'invention concerne un procédé de traitement, par silicopyrohydrolyse, à haute température, de brasquages usés provenant notamment du démontage de cuves pour la production d'aluminium par électrolyse selon la technique Hall-Héroult.

Ces brasquages sont essentiellement constitués par les blocs cathodiques carbonés, les joints et les garnissages latéraux réalisés en pâte carbonée, et l'ensemble des réfractaires et isolants disposés sur les parois latérales et le fond du caisson métallique qui constitue la cuve d'électrolyse.

Aprés usage, ces produits de garnissage sont fortement imprégnés de produits nocifs, tels que des fluorures sodiques ou sodo-alumineux solubles, et des cyanures qu'il faut détruire ou éliminer avant mise en décharge.

## ETAT DE LA TECHNIQUE

On a déjà décrit des procédés de traitement et de réutilisation des vieilles brasques, basés sur un broyage suivi d'une lixiviation par liqueur alcaline, par exemple dans le brevet français FR-A-2338336 (= US 4052288) au nom d'ALUMINIM PECHINEY, ou le brevet US 4113831 (KAISER).

On a également décrit des procédés basés sur une pyrohydrolyse des brasquages usés, notamment dans le brevet EP 027493 (VAW) qui opère en lit dense et dans les brevets US 4065551 (ELKEM), US 4113832 et US 4160809 (KAISER) qui opèrent en lit fluidisé.

Selon ces procédés, on forme, en présence d'un gaz oxydant et de vapeur d'eau à une température suffisante, une phase gazeuse, contenant le fluor des fluorures d'imprégnation décomposés sous forme de HF et du carbone sous forme de CO ou de $CO_2$.

L'inconvénient de ces procédés est qu'ils sont limités en température de réaction du fait d'une forte tendance à l'agglomération, comme on l'explique dans l'article de L.C. BLAYDEN et S.G. EPSTEIN, Journal of Metals, juillet 1984, page 24, ou dans le "Technical Paper" n° A 87-14, The Metallurgical Society of AIME, page 3 (1987, AIME Annual Meeting). En outre, ces techniques de pyrohydrolyse ne peuvent pas traiter de déchets à teneur élevée en $SiO_2$ (au-delà de quelques pour cents) du fait de l'abaissement de la température d'agglomération, ainsi qu'on le voit dans l'article de E.R. CUTSHALL et L.O. DALEY, Journal of Metals, novembre 1986, page 37, table II, où la teneur en Si total dans les déchets traités est de 1,2% seulement. On se trouve donc contraint soit de ne retraiter que la partie carbonée des brasquages usés, soit dès la conception des cuves, de n'utiliser que des garnissages à très faible teneur en silice, donc essentiellement à base d'alumine, dont on sait maintenant qu'ils ont une durée de vie sensiblement inférieure à celle des revêtements modernes en silico-alumineux préformés.

## EXPOSE DU PROBLEME

Bien que la durée de vie moyenne des cuves d'électrolyse se soit sensiblement allongée au cours des dernières années, le problème de la destruction des brasquages usés provenant du démontage des cuves d'électrolyse hors d'usage et de la réutilisation éventuelle des produits traités continue à se poser. En effet, ces vieilles brasques contiennent des quantités importantes de dérivés fluorés (jusqu'à 100 kg/tonne de fluor contenu), des produits sodiques (jusqu'à 200 kg/tonne de Na contenu) et des quantités non négligeables de cyanures (jusqu'à 5 kg/tonne) dont le stockage en plein air présenterait des risques pour l'environnement.

Ces éléments nocifs se retrouvent aussi bien dans la partie carbonée constituant le garnissage interne de la cuve d'électrolyse, que dans une partie du briquetage silico-alumineux qui constitue le garnissage isolant thermique des cuves modernes. En particulier, on retrouve des cyanures dans la plupart des zones de garnissage qui ont été exposées à des températures dépassant 750 à 800°C.

Il était donc nécessaire de concevoir un procédé industriel capable de traiter les brasquages pouvant comporter des teneurs élevées en slice dans des conditions économiques et offrant toute sécurité pour l'environnement, notamment par récupération des dérivés fluorés et destruction totale des cyanures.

## OBJET DE L'INVENTION

L'objet de l'invention est donc un procédé de traitement par pyrohydrolyse de brasquages usés provenant notamment de cuves d'électrolyse Hall-Héroult et constitués d'un mélange de produits carbonés et de produits silico-alumineux, imprégnés de composés minéraux fluorés notamment de sodium, de calcium et d'aluminium,

EP 0 294 300 B1

selon lequel il se forme une phase gazeuse contenant le fluor sous forme d'acide fluorhydrique et du carbone sous forme de CO ou de CO2, à une température au moins égale à 1000°C, en présence d'un gaz oxydant et de vapeur d'eau caractérisé en ce que l'on ajoute préalablement de la silice dans la charge de brasquages usés pour obtenir indépendamment de la phase gazeuse, une phase liquide contenant le silicium, l'aluminium, le calcium, le sodium et la plupart des autres impuretés dont le fer, le titane et les métaux lourds sous forme de composés oxydés, essentiellement sous forme de silicates.

Pour atteindre ce but, nous avons constaté que la composition de la partie non carbonée des déchets à retraiter devait être ajustée — ou maintenue — dans des limites relativement strictes pour les éléments principaux (Sodium — Aluminium — Silicium — Calcium), de façon que le résidu final oxydé (liquide et/ou solide) consiste essentiellement en un mélange de Néphéline (Na2 Si2 Al2 08) d'Anorthite (Ca Al2 Si2 08) et de silicates de soude (de préférence le disilicate Na2Si205, avec éventuellement du monosilicate Na2Si03 en quantité inférieure à celle du disilicate, un excès de silice Si02 non combinée n'étant en aucun cas gênant).

En se ramenant à des proportions atomiques, ces règles peuvent s'exprimer par :

a) — $Si \geq (Na/2) + 2 ca$, et de préférence $Si \geq Na + 2Ca + (Fe/2)$

b) — $Si > Na > Al$.

Pour atteindre cet objectif, on ajoute de la silice aux déchets de brasquage, par exemple sous forme de sable siliceux ou d'autres composés en contenant une proportion importante, comme par exemple le Feldspath 6 $SiO_2$, $Al_2O_3$, $K_2O$ ou l'Albite 6 $SiO_2$, $Al_2O_3$, $Na_2O$ ou encore les déchets riches en silice provenant du lavage de charbons minéraux.

L'invention peut être mise en oeuvre selon au moins deux variantes :

Selon un premier mode de mise en oeuvre, le traitement est effectué en une seule étape, dans un réacteur; selon un second mode de mise en oeuvre, le traitement est effectué en deux étapes successives dans deux réacteurs.

Dans le premier cas, le réacteur unique peut être du type cyclone ou brûleur à pulvérisé et la température de l'ordre de 1300-1400°C.

Dans le second cas, le premier réacteur peut être du type cubilot et le second réacteur du type "four à bassin", la température étant de l'ordre de 1000 à 1400°C dans le premier réacteur, et de l'ordre de 1200 à 1400°C dans le second réacteur.

Un appoint de chaleur peut être fourni, dans chaque réacteur, par une torche à plasma, ou encore par réchauffage de l'air de combustion, par échange thermique avec les gaz et/ou fumées produits.

Le détail de ces deux variantes va maintenant être exposé.

## PREMIER MODE DE MISE EN OEUVRE

Les déchets (vieilles brasques), après broyage, jusqu'à des dimensions convenables pour une injection continue dans le réacteur (de préférence < 5 mm) sont introduits dans un réacteur maintenu à haute température supérieure à 1000°C et de préférence au moins égale à 1300°C ; on injecte dans ce réacteur de l'oxygène (sous forme d'air, ou d'air enrichi en oxygène) en quantité suffisante pour transformer totalement le carbone en monoxyde de carbone CO et de préférence en gaz carbonique $CO_2$, et de l'eau en quantité suffisante pour oxyder quasi totalement les fluorures (NaF, $Na_3AlF_6$, $AlF_3$, $CaF_2$) en oxydes combinables avec la silice, avec libération de gaz fluorhydrique HF, selon la réaction :

$$Mx\ F_{2y} + y\ H_2O + SiO_2 \rightarrow 2y\ HF + (M_x\ O_y,\ n\ SiO_2)$$

Pour aboutir à un tel résultat, on voit qu'il convient d'injecter :

a) un nombre de molécules-grammes d'eau au moins égal à la moitié du nombre d'atomes-grammes de fluor contenu dans les déchets -un excès d'eau étant préférable car déplaçant l'équilibre dans le sens désiré.

Ce qui s'exprime en proportions atomiques ou moléculaires par :

$H_2O/F \geq 0,5$ (soit au moins 9 g d'eau pour 19 g de fluor)

De préférence, on injectera une quantité d'eau suffisante pour que les gaz formés contiennent une quantité de vapeur d'eau en excès, n'ayant pas réagi, au moins égale en proportions moléculaires, au tiers de la quantité d'acide fluorhydrique formée soit, de préférence :

$$H_2O/F \geq 0,83$$

(donc au moins 15 g d'eau pour 19 g de fluor).

b) une quantité d'oxygène pour assurer la combustion du carbone et l'oxydation des composés ou éléments

3

EP 0 294 300 B1

oxydables (carbures, cyanures, sulfures, sodium, fer) correspondant à un rapport :

$O_2/C > 0,5$ et de préférence

$O_2/C > 1$

soit au moins 16 g d'oxygène pour 12 g de carbone

et de préférence 32 g d'oxygène pour 12 g de carbone

l'oxygène étant introduit sous forme d'air naturel ou enrichi en oxygène.

c) Quant à la quantité totale de silice injectée, elle doit être au moins suffisante pour bloquer l'ensemble du sodium et du calcium sous forme de silicates sodiques ou calciques, tels que $Na_2SiO_3$, $Na_2Si_2O_5$, $Na_2Si_2Al_2O_8$ ou $CaAl_2Si_2O_8$, l'énergie de liaison du sodium et du calcium dans ces composés étant importante et permettant donc de libérer plus efficacement le fluor auparavant bloqué sous forme de fluorures $NaF$, $Na_3AlF_6$, $NaAlF_4$ ou $CaF_2$.

Bien entendu, lorsque les déchets de brasquage contiennent déjà de la silice, sous forme combinée ou non, il faut en tenir compte pour évaluer la quantité d'addition nécessaire.

De préférence, la quantité totale de silicium après addition éventuelle de silice aux déchets à retraiter sera défini par la relation (exprimée en atomes) :

$$Si \geq (Na/2) + 2\,Ca$$

ce qui conduit à la production des silicates $Na_2Si_2O_3$ et $CaAl_2Si_2O_8$

et de préférence

$$Si \geq Na + 2\,Ca + Fe/2$$

ce qui conduit à la production des silicates $Na_2Si_2O_5$, $CaAl_2Si_2O_8$ et de silicate de fer $Fe_2SiO_4$.

Dans le premier cas, le rendement en HF récupéré diminue quelque peu, mais le bilan énergétique est plus favorable.

Exemple d'application 1 (en un seul stade)

Nous avons retraité par le procédé indiqué ci-dessus, une tonne de déchets de brasquage de cuves d'électrolyse dont la composition pondérale était la suivante :

TABLEAU 1

| ELEMENT | COMPOSITION PONDERALE (kg/tonne) | COMPOSITION ATOMIQUE Atomes-grammes/kg |
|---|---|---|
| C | 365 | 30,42 |
| F | 90 | 4,74 |
| Na | 170 | 7,39 |
| Ca | 20 | 0,50 |
| Al | 75 | 2,78 |
| Si | 80 | 2,85 |
| Fe | 15 | 0,27 |
| S | 2 | 0,06 |
| Radical $CN^-$ | 3 | 0,12 |
| O (lié) | 180 | 11,25 |

a) Dans un premier temps, ces déchets broyés à $\leq 5$ mm ont été additionnés de 5,7 moles de silice par kg de déchet (soit 350 kg de silice par tonne de déchets), de façon à respecter la condition :

$Si \simeq Na + 2\,Ca + Fe/2$ (en atomes-grammes).

b) Ce mélange a été ensuite introduit dans un réacteur cyclone maintenu à 1400°C, en même temps que

4

de l'eau (4 moles/kg de déchets d'origine, soit 54 kg d'eau par tonne de mélange déchets + silice introduit dans le réacteur), et de l'oxygène, le total d'oxygène injecté (sous forme d'air naturel ou enrichi en oxygène) représentant 520 $Nm^3$ $O_2$/tonne de mélange déchets + silice.

Dans le cas considéré, la teneur en carbone est très suffisante pour assurer, par sa combustion, le maintien en température du réacteur.

Le bilan thermique s'établit comme suit :

Besoins

```
    - Echauffement   1 tonne brasquage      à 1400°C
                     + 350 kg silice
                     +  54 kg H₂O
                     + gaz comburant
       Si le gaz comburant est de l'oxygène pur   ———→ 1100 Th
       Si le gaz comburant est de l'air           ———→ 2350 Th.
```

Ressources

— Combustion, oxydation et hydrolyse des produits fluorés à 1400°C = 2900 Th/T. IL y a donc un large excès.

Si pour certains déchets, la teneur en carbone se révèle insuffisante pour assurer le maintien en température, il est tout à fait possible de rajouter du carbone sous forme de charbon minéral ou de fuel et/ou de remplacer une partie de l'air par de l'oxygène ou encore de préchauffer l'air de combustion par échange avec les gaz chauds provenant de la réaction.

Dans les conditions opératoires que l'on vient de décrire, on a pu constater que la quasi totalité du fluor (90 à 97%) était évacuée sous forme de HF, en concentration approchant 3%, dans les fumées, elles-mêmes essentiellement formées d'azote, de gaz carbonique $CO_2$, et d'une faible quantité d'eau et d'oxygène excédentaires. Ces fumées étaient pratiquement exemptes de vapeurs condensables au-dessus de 700°C, telles que vapeurs de fluorure de sodium NaF ou de soude NaOH, ou de sodium Na. La pression partielle des composés cyanurés (HCN, NaCN) était inférieure au seuil de détection.

Le résidu était intégralement sous forme liquide (Pf 1400°C) et composé essentiellement d'un mélange de silicate de soude $Na_2Si_2O_5$ (56% en poids) de Néphéline $Na_2Si_2Al_2O_8$ (28% en poids) et d'Anorthite $CaSi_2Al_2O_8$ (15% en poids) avec des oxydes de fer dissous et une teneur en cyanures extrèmement faible (moins de 10 milligrammes par tonne, au lieu de 3 kg/tonne au départ), la plupart des "métaux lourds" étant combinés également sous forme de silicates.

Les fumées contenant HF ont été, dans cet essai, mélangées aux fumées captées sur un ensemble de 120 cuves d'électrolyse d'intensité 280 kA, dont le débit de captage est de l'ordre de $10^6$ $Nm^3 \cdot h^{-1}$, ce qui permettait de diluer ces fumées très chaudes par un facteur de l'ordre de 300, et de récupérer la majorité du fluor dans ce procédé de traitement des fumées des cuves d'électrolyse connu sous le nom de captation "voie sèche" sur alumine à grande surface spécifique (> 30 $m^2 \cdot g^{-1}$.)

Le laitier liquide a été coulé sous une pulvérisation d'air comprimé de façon à obtenir un solide divisé dont on a extrait le silicate de sodium soluble par lavage à l'eau chaude. Ce silicate de sodium a une valeur marchande non négligeable (environ 200 $ US par tonne). Le résidu insoluble du lavage ne présente aucun risque et peut être déposé en décharge non contrôlée.

## DEUXIEME MODE DE MISE EN OEUVRE

### 1- 1ère étape :

Dans un premier réacteur, du type cubilot, on gazéifie le carbone provenant essentiellement des seuls blocs cathodiques, grossièrement concassés, avec une quantité d'air au moins suffisante pour transformer ce carbone en monoxyde de carbone CO.

Dans ce réacteur, on n'ajoute pas d'eau pour éviter de former de l'acide fluorhydrique.

Les conditions nécessaires pour assurer efficacement cette gazéification sont les suivantes :

La quantité d'oxygène nécessaire est celle permettant :

— de tranformer C en CO

— d'oxyder Na en $Na_2O$, Fe métal en FeO, FeS en FeO + S, NaCN en $Na_2O$ + CO + $N_2$ et $Al_4C_3$ en $AL_2O_3$ + CO.

Elle est donc égale à (en poids) :

$O_2$ = 16 × [(C/12) + (Na/46) + (Fe/56) + (FeS/88) + (NaCN/65,3) + (Al4C3/24)]

où C, Na, Fe, FeS, NaCN et $Al_4C_3$ sont les poids de ces éléments et composés contenus dans les blocs.

Les gaz sortant de ce réacteur sont essentiellement formés d'azote et de monoxyde de carbone avec, éventuellement, des quantités mineures de dioxyde de carbone, de vapeur d'eau, d'hydrogène, de fluorures, de sodium et de soufre vaporisés.

Deuxième étape

L'ensemble des produits fondus issus du premier réacteur est transféré dans un second réacteur où l'on ajoute également le reste des déchets de brasquage (autres que les blocs carbonés : joints, dalles de côtés, briques imprégnées, etc...) avec addition de silice, d'eau et d'oxygène (air naturel ou enrichi en oxygène), de façon à :

a) brûler le CO récupéré au premier stade, pour le transformer en $CO_2$, ce qui assure les besoins énergétiques de la fusion et de la silicohydrolyse.

b) brûler le carbone résiduel et les composés oxydables contenus dans les déchets rajoutés.

c) hydrolyser, par injection d'eau, les composés fluorés issus du premier réacteur et ceux qui ont été ajoutés dans le second, selon les réactions globales :

(1) $2NaF + H_2O + 2SiO_2 \rightarrow 2HF + Na_2 Si_2 O_5$

(2) $2Na_3AlF_6 + 6H_2O + 5SiO_2 \rightarrow 12 HF + Na_2Al_2Si_2O_8 + Na_2Si_2O_5$

(3) $CaF_2 + H_2O + Na_2Al_2Si_2O_8 + 2SiO_2 \rightarrow 2HF + CaAl_2Si_2O_8 + Na_2Si_2O_5$

ce qui correspond à une injection d'eau, en proportion atomique, au moins égale à la moitié de la quantité de fluor présente dans les déchets, soit au moins 9 g d'eau pour 19 g de fluor

d) bloquer par une addition de silice l'ensemble des produits calciques ou sodiques de façon à obtenir une phase liquide formée essentiellement d'un mélange des silicates de sodium $Na_2Si_2O_5$ et éventuellement $Na_2SiO_3$ en plus faible quantité, et de silico-aluminates de calcium ou de sodium tels que la Néphéline $(Na_2Al_2Si_2O_8)$ ou l'Anorthite $(CaAl_2Si_2O_8)$.

La température de fusion de ce mélange est inférieure à 1400°C.

Le produit de la réaction est donc intégralement à l'état liquide.

Il contient, en plus des constituants indiqués, des oxydes de fer dissous et une teneur en cyanure extrèmement faible, de l'ordre de 10 milligrammes par tonne au lieu de 3 kg/T au départ.

Les gaz provenant des combustions et oxydations comportant les gaz de l'air et la vapeur d'eau n'ayant pas réagi, et l'acide fluorhydrique provenant des réactions (1), (2), (3), peuvent ensuite être traités à plus basse température de façon à capter ce HF sur de l'alumine réactive, où il est transformé en fluorure d'aluminium $AlF_3$ selon la réaction suivante, possible en-dessous de 800°C :

$$6 HF + Al_2O_3 \rightarrow 2 AlF_3 + 3 H_2O$$

ou

$$3 HF + Al (OH)_3 \rightarrow AlF_3 + 3 H_2O$$

Ceci peut se faire soit dans un réacteur indépendant, utilisant par exemple du trihydrate d'alumine Al $(OH)_3$, soit par réinjection dans un circuit habituel de captage des gaz issus des cuves d'électrolyse pour aluminium, utilisant de l'alumine métallurgique $Al_2O_3$ à forte surface spécifique (plus de 30 m² par gramme), comme on l'a indiqué dans le cas du procédé en un seul stade.

Exemple d'application 2 (procédé en deux stades)

On a traité, selon ce second mode de mise en oeuvre, des déchets de vieilles brasques, dont on avait séparé au préalable la partie riche en carbone provenant des blocs, des autres déchets.

Traitement dans le premier réacteur :

Les blocs cathodiques préalablement concassés grossièrement à une granulométrie "tout venant" 100 à

6

150 mm (ou même 50-150 mm) ont été chargés dans un réacteur de gazéification du type "cubilot".

Leur composition était la suivante (en poids pour une tonne de blocs)

| | |
|---|---|
| C | 710,4 |
| Fe | 5,5 |
| Na | 54,6 |
| FeS | 15,0 |
| NaCN | 8,2 |
| $Al_4C_3$ | 41,0 |
| NaF | 102,5 |
| $Na_3AlF_6$ | 46,4 |
| $CaF_2$ | 6,4 |

On a rajouté et mélangé de façon homogène 160 kg de silice par tonne de blocs, sous forme de sable, et l'on a assuré la gazéification du carbone et l'oxydation des autres composés par une injection de 720 Nm³ d'oxygène par tonne de bloc, sous forme d'air enrichi à 50% (ou d'air non enrichi mais préalablement préchauffé à 700°C par échange avec les gaz chauds sortant du réacteur). Dans ces conditions, on a constaté que la quantité de CO obtenue représentait 1700 kg par tonne de blocs traités, mélangés avec de l'azote et des quantités minimes de vapeurs de soufre et de sodium.

La phase liquide qui s'est rassemblée dans le fond du réacteur comportait essentiellement des silicates $Na_2Si_2O_5$, $NaAlSiO_2$ et des fluorures, non transformés, provenant de l'imprégnation des blocs carbonés par l'électrolyte, tels que NaF, $Na_3AlF_6$, $CaF_2$.

Cette phase liquide représentait environ 500 kg/tonne de blocs traités. On a ainsi traité 3660 kg de blocs imprégnés qui ont fourni (environ) 1800 kg de phase liquide.

Traitement dans le second réacteur :

Ces 1800 kg de phase liquide obtenus dans le premier réacteur ont été transvasés dans le second réacteur, qui dans cet essai était un four de type à bassin, et l'on a rajouté 6340 kg des autres déchets dont la composition moyenne était :

| | |
|---|---|
| C | 1030 kg |
| NaCN | 30 kg |
| $Al_4C_3$ | 70 kg |
| NaF | 850 kg |
| $Na_3AlF_6$ | 205 kg |
| $CaF_2$ | 140 kg |
| $Na_2SiO_3$ | 1650 kg |
| $SiO_2$ | 940 kg |
| $Al_2O_3$ | 1000 kg |
| CaO | 140 kg |
| $Fe_2O_3$ | 185 kg |
| $H_2O$ | 100 kg |

Le chauffage de ce second four a été assuré par des brûleurs utilisant, comme combustible, le gaz riche en monoxyde de carbone issu du premier réacteur.

La charge a été additionnée d'une quantité de silice de 3000 kg sous forme de sable. L'addition de silice ayant pour objet de "bloquer" $Na_2O$, FeO et $Al_2O_3$ formés par oxydation, sous forme de silicates fusibles ($Na_2Si_2O_5$, $Fe_2SiO_4$, $NaAlSiO_4$ et $CaAl_2Si_2O_8$). Elle est donc égale, à titre indicatif, à :

$$SiO_2 = 60 \left( \frac{Na}{23} + \frac{Ca}{20} + \frac{Fe}{112} - \frac{Si}{28} \right)$$

où Na, Ca, Fe sont les poids de Sodium, Calcium, Fer et Silicium, combinés ou non, contenus dans les déchets introduits dans ce 2ème réacteur. (y compris la phase liquide provenant du 1er réacteur).

On a injecté, par des cannes dont l'extrémité était immergée dans le bain fondu, 550 kg de vapeur d'eau de façon à assurer la pyrohydrolyse des produits fluorés fondus et la gazéification des particules de carbone en suspension dans le bain.

7

La combustion de CO et l'oxydation des composés et éléments oxydables ont nécessité une quantité totale d'oxygène de 4400 Nm³, sous forme d'air préchauffé, injecté pour partie aux brûleurs et pour partie en mélange avec la vapeur d'eau injectée par les cannes.

Le résidu final était sensiblement identique à celui obtenu dans le procédé en un stade, c'est-à-dire constitué par un mélange liquide de silicate de sodium ($Na_2Si_2O_5$) de Néphéline et d'Anorthite, à très faible teneur en cyanure (< 10 mg/tonne).

Les gaz fluorés ont été, comme dans l'exemple 1, injectés dans le système de captage sur alumine à haute surface spécifique (> 30 m²/gramme) des effluents gazeux provenant d'une série de cuves d'électrolyse Hall-Héroult. Le rendement global de récupération du fluor a été supérieur à 90% et, en moyenne, de l'ordre de 93 à 97%. Le laitier liquide a été de la même façon granulé à l'air comprimé puis traité à l'eau chaude pour récupérer les silicates de sodium solubles, qui sont utilisables notamment dans la fabrication des détergents, l'adoucissement des eaux calcaires, la fabrication des liqueurs denses pour le tri des minerais.

La mise en oeuvre de l'invention selon l'une ou l'autre des variantes décrites permet de traiter les brasquages usés provenant du démontage des cuves d'électrolyse hors d'usage, mais aussi, de façon plus générale, tous les produits carbonés ou réfractaires alumineux, silicoalumineux, imprégnés de produits fluorés et qu'il n'est pas possible d'abandonner en plein air sans risque pour l'environnement, par exemple les garnissages usés de fours de refusion d'aluminium ou d'alliages d'aluminium avec couverture de flux contenant des produits fluorés.

Il est bien entendu que certaines variantes peuvent être introduites aux deux exemples donnés, et que, par exemple, il ne sera pas contraire à l'invention, dans le cas du deuxième exemple, de retraiter simultanément dans le premier réacteur le carbone provenant des blocs cathodiques et le carbone provenant d'autres parties du garnissage telles que dalles de côté et joints de pâte cuite entre côtés et blocs cathodiques.

## Revendications

1. Procédé de traitement par pyrohydrolyse de brasquages usés provenant notamment de cuves d'électrolyse Hall-Héroult et constitués d'un mélange de produits carbonés et de produits silico-alumineux, imprégnés de composés minéraux fluorés notamment de sodium, de calcium et d'aluminium, selon lequel il se forme une phase gazeuse contenant le fluor sous forme de HF et du carbone sous forme de CO ou de CO2, à une température au moins égale à 1000°C, en présence d'un gaz oxydant et de vapeur d'eau caractérisé en ce que l'on ajoute préalablement de la silice dans la charge de brasquages usés pour obtenir, indépendamment de de la phase gazeuse, une phase liquide contenant le silicium, l'aluminium, le calcium, le sodium et la plupart des autres impuretés dont le fer, le titane et les métaux lourds sous forme de composés oxydés, essentiellement sous forme de silicates.

2. Procédé selon revendication 1, caractérisé en ce que le gaz oxydant est de l'air.

3. Procédé selon revendication 1, caractérisé en ce que le gaz oxydant est de l'air enrichi en oxygène.

4. Procédé selon revendication 1, caractérisé en ce que l'eau est introduite dans le réacteur à l'état liquide ou de vapeur en une proportion atomique correspondant à la relation $H_2O/F \geq 0,5$ soit au moins 9 g d'eau pour 18 g de fluor.

5. Procédé selon revendication 1, caractérisé en ce que l'eau est introduite dans le réacteur à l'état de liquide ou de vapeur, en proportion atomique correspondant à la relation $H_2O/F \geq 0,83$ soit au moins 15 g d'eau pour 18 g de fluor.

6. Procédé selon les revendication 4 ou 5, caractérisé en ce que l'eau est injectée, sous forme de vapeur, par au moins une canne dont l'extrémité plonge dans la phase liquide.

7. Procédé selon revendication 1, caractérisé en ce que l'oxygène est introduit dans une proportion atomique, par rapport à la quantité de carbone, correspondant à la relation : $O_2/C > 0,5$ soit au moins 12 g d'oxygène pour 6 g de carbone.

8. Procédé selon l'une quelconque des revendications 1 à 7 caractérisé en ce que l'oxygène est introduit dans le réacteur dans une proportion atomique, par rapport à la quantité de carbone correspondant à la relation $O_2/C > 1$, soit au moins 32 g d'oxygène pour 12 g de carbone.

9. Procédé selon l'une quelconque des revendications 1 à 8 caractérisé en ce que la composition de la partie non carbonée des brasquages à traiter doit être ajustée par addition de silice $SiO_2$, de façon que la proportion atomique des constituants obéisse à la relation : $Si \geq (Na/2) + 2\,Ca$.

10. Procédé selon revendication 9, caractérisé en ce que la composition de la partie non carbonée des brasquages à traiter doit être ajustée par addition de silice $SiO_2$, de façon que la proportion atomique des constituants obéisse à la relation $Si \geq Na + 2\,Ca + (Fe/2)$.

11. Procédé selon l'une quelconque des revendications 1 à 10 caractérisé en ce que les composés oxydés

EP 0 294 300 B1

formés dans la phase solide ou liquide sont, essentiellement, les silicates de soude $Na_2SiO_3$, $Na_2Si_2O_5$, $Na_4SiO_4$ et les silico-aluminates $NaAlSiO_4$ (Népheline) et $CaAl_2Si_2O_8$ (Anorthite).

12. Procédé selon l'une quelconque des revendications 1 à 11 caractérisé en ce que le traitement est effectué en une seule phase, dans un réacteur, à une température au moins égale à 1300°C, avec injection simultanée de gaz oxydant, d'eau ou de vapeur d'eau et de silice, les résidus de brasquages ayant été finement broyés au préalable.

13. Procédé selon l'une quelconque des revendications 1 à 12 caractérisé en ce que le procédé est mis en oeuvre en deux stades :

— dans un premier stade, on introduit dans un premier réacteur chauffé à une température comprise entre 1000 et 1400°C, les blocs cathodiques concassés et on injecte un gaz oxydant qui transforme la plus grande partie du carbone des blocs en monoxyde de carbone et les autres composés d'imprégnation des blocs en une phase fondue

— dans un second stade, la phase fondue issue du premier réacteur est transférée dans un second réacteur chauffé par les gaz riches en monoxyde de carbone provenant du premier réacteur, à une température au moins égale à 1200°C, et on y ajoute les autres résidus de brasquages, de la silice et de l'eau ou de la vapeur d'eau.

14. Procédé, selon revendication 13, caractérisé en ce que, au second stade, on introduit dans le réacteur une quantité d'eau, à l'état liquide ou de vapeur, en une proportion atomique correspondant à la relation $H_2O/F \geq 0,5$, soit au moins 9 g d'eau pour 18 g de fluor, ainsi que de l'oxygène, en quantité au moins suffisante pour assurer la combustion du carbone résiduel, des composés et éléments oxydables contenus dans les déchets ajoutés, et du gaz provenant du premier réacteur.

15. Procédé, selon revendication 14, caractérisé en ce que, au second stade, l'eau est introduite dans une proportion atomique correspondant à la relation $H_2O/F \geq 0,83$, soit au moins 15 g d'eau pour 18 g de fluor.

16. Procédé, selon revendications 14 ou 15, caractérisé en ce que l'eau est injectée sous forme de vapeur par au moins une canne dont l'extrémité plonge dans la phase fondue.

17. Procédé selon l'une quelconque des revendications 13 à 16, caractérisé en ce que, au second stade, on ajoute en outre la quantité de silice nécessaire pour transformer la plupart des métaux, combinés dans les déchets, en silicates, essentiellement en silicates de sodium, silicoaluminates de sodium, silico-aluminates de calcium.

18. Procédé selon l'une quelconque des revendications 13 à 17, caractérisé en ce que la phase liquide récupérée en fin de traitement est granulée puis traitée à l'eau pour en extraire les silicates de sodium solubles.

19. Procédé selon l'une quelconque des revendications 1 à 16 caractérisé en ce que les composés fluorés gazeux produits, et notamment l'acide fluorhydrique HF, sont injectés dans une installation existante de captage des effluents fluorés émis par des cuves d'électrolyse HallHéroult.

20. Procédé, selon revendication 12, caractérisé en ce que le réacteur est choisi parmi les réacteurs du type ou brûleur à pulvérisé.

21. Procédé, selon revendication 13, caractérisé en ce que le premier réacteur est du type cubilot et le second réacteur du type four à bassin.

22. Procédé selon revendication 20 ou 21, caractérisé en ce que chaque réacteur peut recevoir un appoint de puissance par une torche à plasma.

23. Procédé, selon revendication 20 ou 21, caractérisé en ce que chaque réacteur peut recevoir un appoint de puissance par préchauffage de l'air de combustion dans un échangeur thermique avec les gaz et/ou fumées produits.

## Claims

1. A method of treating by silicopyrohydrolysis worn linings from Hall-Heroult electrolysis tanks and constituted by a mixture of carbonated products and silico-aluminous products, impregnated with fluorinated mineral compounds, particularly sodium, calcium and aluminium, according to which a gaseous phase is formed containing the fluorine in the form of HF and carbon in the form of $CO_2$, at a temperature at least equal to 1000°, in the presence of an oxidising gas and water vapour, characterised in that silica is added beforehand to the batch of worn linings in order, independently of the gaseous phase, to obtain a liquid phase containing silicium, aluminium, calcium, sodium and the majority of the other impurities including iron, titanium and heavy metals in the form of oxidised compounds, essentially in the form of silicates.

2. A method according to claim 1, characterised in that the oxidising gas is air.

3. A method according to claim 1, characterised in that the oxidising gas is air enriched with oxygen.

4. A method according to claim 1, characterised in that the waster is introduced into the reactor in the liquid

9

or vapour state in an atomic proportion corresponding to the term $H_2O/F \geqq 0.5$ or at least 9 g water to 18 g fluorine.

5. A method according to claim 1, characterised in that the water is introduced into the reactor in the liquid or vapour state in an atomic proportion corresponding to the term $H_2O/F \geqq 0.83$, in other words at least 15 g water to 18 g fluorine.

6. A method according to claim 4 or 5, characterised in that the waster is injected in the form of vapour, through at least one tube, the end of which is immersed in the liquid phase.

7. A method according to claim 1, characterised in that the oxygen is introduced in an atomic proportion in relation to the quantity of carbon which corresponds to the term : $O_2/C > 0.5$, in other words at least 12 g of oxygen to 6 g of carbon.

8. A method according to any one of claims 1 to 7, characterised in that the oxygen is introduced in the reactor in an atomic proportion in relation to the quantity of carbon corresponding to the term $O_2/C > 1$, in other words at least 32 g of oxygen per 12 g of carbon.

9. A method according to any one of claims 1 to 8, characterised in that the composition of the non-carbonated part of the linings to be treated must be adjusted by the addition of silica $siO_2$, so that the atomic proportion of constituents satisfies the relationship : $Si \geq (Na/2) + 2 Ca$.

10. A method according to claim 9, characterised in that the composition of the non-carbonated part of the linings to be treated must be adjusted by the addition of silica $SiO_2$, so that the atomic proportion of constituents satisfies the term $Si \geq Na + Ca + (Fe/2)$.

11. A method according to any one of claims 1 to 10, characterised in that the oxidised compounds formed in the solid phase or liquid phase are essentially sodium silicates $Na_2SiO_3$, $Na_2Si_2O_5$, $Na_4SiO_4$ and the silico-aluminates $NaAlSiO_4$ (nepheline) and $CaAl_2Si_2O_8$ (anorthite).

12. A method according to any one of claims 1 to 11, characterised in that the treatment is carried out in a single phase, in one reactor, at a temperature at least equal to 1300°C, with a simultaneous injection of oxidising gas, water or steam and silica, the residues of the linings having been finely crushed beforehand.

13. A method according to any one of claims 1 to 12, characterised in that the method is carried out in two stages :

— in a first stage, into a first reactor heated to a temperature of between 1000 and 1400°C, the crushed cathode blocks are introduced and an oxidising gas is injected which converts the major part of the carbon of the blocks to carbon monoxide and the other compounds which impregnate the blocks are converted into a molten phase ;

— in a second stage, the molten phase from the first reactor is transferred to a second reactor heated by gases rich in carbon monoxide from the first reactor, at a temperature is at least equal to 1200°C, and the other lining residues, silica and water or steam are added.

14. A method according to claim 13, characterised in that in the second stage, there are introduced into the reactor a quantity of water in the liquid or vapour stage in an atomic proportion which corresponds to the term $H_2O/F \geq 0.5$, in other words at least 9 g water to 18 g fluorine, together with oxygen, in a quantity at least sufficient to ensure combustion of the residual carbon, and of the oxidisable elements and compounds contained in the added waste, and of the gas originating from the first reactor.

15. A method according to claim 14, characterised in that during the second stage, the water is introduced in an atomic proportion corresponding to the term $H_2O/F \geq 0.083$, in other words at least 15 g water to 18 g fluorine.

16. A method according to claims 14 or 15, characterised in that the water is injected in the form of vapour through at least one tube, the end of which is immersed in the molten phase.

17. A method according to any one of claims 13 to 16, characterised in that in the second stage, the quantity of silica needed to convert the majority of the metals, combined within the waste materials, into silicates, essentially silicates of sodium, sodium silico-aluminates and calcium silico-aluminates is added.

18. A method according to any one of claims 13 to 17, characterised in that the liquid phase recovered upon completion of treatment is granulated then treated with water in order to extract from it the soluble sodium silicates.

19. A method according to anyone of claims 1 to 16, characterised in that the gaseous fluorinated compounds produced and in particular hydrofluoric acid HF, are injected into an existing installation for collecting fluorinated effluent issuing from Hall-Heroult electrolysis tanks.

20. A method according to claim 12, characterised in that the reactor is chosen from reactors of the cyclone or spray burner type.

21. A method according to claim 13, characterised in that the first reactor is of the cupola type, while the second reactor is of the basin or tank furnace type.

22. A method according to claim 20 or 21, characterised in that each reactor is able to receive a power supply via a plasma torch.

23. A method according to claim 20 or 21, characterised in that each reactor is able to receive a power supply by preheating the combustion air in a heat exchanger with the gases and/or smoke produced.

**Patentansprüche**

1. Verfahren zur Behandlung von verbrauchten feuerfesten Materialien, die vornehmlich aus Elektrolysierwannen der Hall-Héroult-Elektrolyse stammen und aus einem Gemisch von kohlenstoffhaltigen Produkten und Aluminiumsilicatprodukten, die mit anorganischen Fluorverbindungen, insbesondere von Natrium, Calcium und Aluminium, imprägniert sind, bestehen, durch Pyrohydrolyse, bei der sich eine Gasphase bildet, die das Fluor in Form von HF und Kohlenstoff in Form von CO oder $CO_2$ enthält, bei einer Temperatur von mindestens 1000°C in Gegenwart eines oxidierenden Gases und von Wasserdampf, **dadurch gekennzeichnet**, daß man der Charge der verbrauchten feuerfesten Materialien zuerst Kieselsäure beigibt, um unabhängig von der Gasphase eine flüssige Phase zu erhalten, die das Silicium, das Aluminium, das Calcium, das Natrium und den größten Teil der anderen Verunreinigungen enthält, darunter Eisen, Titan und die Schwermetalle, in Form oxidischer Verbindungen, im wesentlichen in Form von Silicaten.

2. Verfahren nach Anspruch 1, dadurch gekennzeichnet, daß das oxidierende Gas Luft ist.

3. Verfahren nach Anspruch 1, dadurch gekennzeichnet, daß das oxidierende Gas mit Sauerstoff angereicherte Luft ist.

4. Verfahren nach Anspruch 1, dadurch gekennzeichnet, daß das Wasser in flüssiger Form oder dampfförmig in einem Molverhältnis $H_2O/F \geq 0,5$ in den Reaktor eingeführt wird, also mindestens 9 g Wasser auf 18 g Fluor.

5. Verfahren nach Anspruch 1, dadurch gekennzeichnet, daß das Wasser in flüssiger Form oder dampfförmig in einem Molverhältnis $H_2O/F \geq 0,83$ in den Reaktor eingeführt wird, also mindestens 15 g Wasser auf 18 g Fluor.

6. Verfahren nach den Ansprüchen 4 oder 5, dadurch gekennzeichnet, daß das Wasser dampfförmig durch mindestens ein Rohr eingeführt wird, dessen Ende in die flüssige Phase eintaucht.

7. Verfahren nach Anspruch 1, dadurch gekennzeichnet, daß der Sauerstoff, bezogen auf die Kohlenstoffmenge, in einem Molverhältnis $O_2/C \geq 0,5$ eingeführt wird, also mindestens 12 g Sauerstoff auf 6 g Kohlenstoff.

8. Verfahren nach einem der Ansprüche 1 bis 7, dadurch gekennzeichnet, daß der Sauerstoff, bezogen auf die Kohlenstoffmenge, in einem Molverhältnis $O_2/C > 1$ in den Reaktor eingeführt wird, also mindestens 32 g Sauerstoff auf 12 g Kohlenstoff.

9. Verfahren gemäß einem der Ansprüche 1 bis 8, dadurch gekennzeichnet, daß die Zusammensetzung des nichtkohlenstoffhaltigen Anteils der zu behandelnden feuerfesten Materialien durch Zusatz von Kieselsäure $SiO_2$ so eingestellt wird, daß das Molverhältnis der Bestandteile der Beziehung $Si \geq (\frac{Na}{2}) + 2\ Ca$ entspricht.

10. Verfahren nach Anspruch 9, dadurch gekennzeichnet, daß die Zusammensetzung des nichtkohlenstoffhaltigen Anteils der zu behandelnden feuerfesten Materialien durch Zusatz von Kieselsäure $SiO_2$ so eingestellt wird, daß das Molverhältnis der Bestandteile der Beziehung $Si \geq Na + 2\ Ca + (\frac{Fe}{2})$ entspricht.

11. Verfahren nach einem der Ansprüche 1 bis 10, dadurch gekennzeichnet, daß die in der festen oder flüssigen Phase gebildeten oxidischen Verbindungen im wesentlichen die Natriumsilicate $Na_2SiO_3$, $Na_2Si_2O_5$, $Na_4 SiO_4$ und die Aluminiumsilicate $NaAlSiO_4$ (Nephelin) und $CaAl_2Si_2O_8$ (Anorthit) sind.

12. Verfahren nach einem der Ansprüche 1 bis 11, dadurch gekennzeichnet, daß die Behandlung in einer einzigen Phase in einem Reaktor bei einer Temperatur von mindestens 1300°C durchgeführt wird, mit gleichzeitiger Einführung von oxidierendem Gas, Wasser oder Wasserdampf und von Kieselsäure, wobei die Rückstände der feuerfesten Materialien zuvor fein vermahlen wurden.

13. Verfahren nach einem der Ansprüche 1 bis 12, dadurch gekennzeichnet, daß das Verfahren in zwei Stufen durchgeführt wird :
— In einer ersten Stufe führt man in einen ersten Reaktor, der auf eine Temperatur zwischen 1000 und 1400°C aufgeheizt ist, die zerkleinerten Kathodenblöcke ein und leitet ein oxidierendes Gas ein, das den größten Teil des Koblenstoffs der Blöcke in Koblenmonoxid und die anderen Bestandteile der Imprägnierung der Blöcke in eine geschmolzene Phase überführt ;
— in einer zweiten Stufe wird die aus dem ersten Reaktor erhaltene geschmolzene Phase in einen zweiten Reaktor übergeführt, der durch die aus dem ersten Reaktor stammenden koblenmonoxidreicben Gase auf eine Temperatur von mindestens 1200°C erwärmt ist, und mit den anderen Rückständen der Auskleidung, Kieselsäure und Wasser oder Wasserdampf versetzt.

14. Verfahren nach Anspruch 13, dadurch gekennzeichnet, daß man in der zweiten Stufe eine flüssige oder dampfförmige Wassermenge, bei der das Molverhältnis der Beziehung $H_2O/F \geq 0,5$ entspricht, also mindestens 9 g Wasser auf 18 g Fluor, sowie Sauerstoff in einer Menge, die mindestens ausreicht, um die Verbrennung des restlichen Kohlenstoffs und der oxidierbaren Verbindungen und Elemente, die in den zugesetzten Rückständen enthalten sind, und des aus dem ersten Reaktor stammenden Gases zu gewährleisten, in den Reaktor einführt.

15. Verfahren nach Anspruch 14, dadurch gekennzeichnet, daß in der zweiten Stufe das Wasser in einem Molverhältnis $H_2O/F$ 0,83 eingeführt wird, also mindestens 15 g Wasser auf 18 g Fluor.

16. Verfahren nach den Ansprüchen 14 oder 15, dadurch gekennzeichnet, daß das Wasser gasförmig durch mindestens ein Rohr, dessen Ende in die geschmolzene Phase eintaucht, eingeführt wird.

17. Verfahren nach einem der Ansprüche 13 bis 16, dadurch gekennzeichnet, daß man in der zweiten Stufe außerdem die nötige Menge Kieselsäure zugibt, um die Mehrzahl der Metalle, die in den Rückständen vorliegen, in Silicate, insbesondere Natriumsilicate, Natrium-Aluminium-Silicate und Calcium-Aluminium-Silicate zu überführen.

18. Verfahren nach einem der Ansprüche 13 bis 17, dadurch gekennzeichnet, daß die am Ende der Behandlung gewonnene flüssige Phase zerkleinert und anschließend mit Wasser behandelt wird, um die löslichen Natriumsilicate zu extrahieren.

19. Verfahren nach einem der Ansprüche 1 bis 16, dadurch gekennzeichnet, daß die gebildeten gasförmigen fluorierten Verbindungen, und insbesondere die Fluorwasserstoffsäure HF, in eine vorhandene Auffanganlage für die aus den Elektrolysewannen des Hall-Héroult-Prozesses entweichenden fluorhaltigen Schadstoffe eingeleitet werden.

20. Verfahren nach Anspruch 12, dadurch gekennzeichnet, daß der Reaktor unter den Reaktoren vom Zyklontyp oder vom Kohlenstaubbrennertyp ausgewählt wird.

21. Verfahren nach Anspruch 13, dadurch gekennzeichnet, daß der erste Reaktor vom Kupolofentyp und der zweite Reaktor vom Typ eines Beckenofens sind.

22. Verfahren nach den Ansprüchen 20 oder 21, dadurch gekennzeichnet, daß jeder Reaktor eine zusätzliche Energiezufuhr durch einen Plasmabrenner erhalten kann.

23. Verfahren nach Anspruch 20 oder 21, dadurch gekennzeichnet, daß jeder Reaktor eine zusätzliche Energiezufuhr durch Vorwärmung der Verbrennungsluft in einem Wärmetauscher mit den gebildeten Gasen und/oder den gebildeten Rauchgasen erhalten kann.